**Europäisches Patentamt**

**European Patent Office**

**Office européen des brevets**

(11) Veröffentlichungsnummer: **0 236 886 B1**

# EUROPÄISCHE PATENTSCHRIFT

(45) Veröffentlichungstag der Patentschrift: **29.04.92**

(51) Int. Cl.⁵: **H02B 13/02**

(21) Anmeldenummer: **87102882.5**

(22) Anmeldetag: **28.02.87**

(54) **Metallgekapselte Schaltanlage.**

(30) Priorität: **14.03.86 DE 3608482**

(43) Veröffentlichungstag der Anmeldung:
**16.09.87 Patentblatt 87/38**

(45) Bekanntmachung des Hinweises auf die
Patenterteilung:
**29.04.92 Patentblatt 92/18**

(84) Benannte Vertragsstaaten:
**CH DE FR LI SE**

(56) Entgegenhaltungen:
**EP-A- 0 128 377**
**DE-A- 3 330 550**
**US-A- 4 232 925**

(73) Patentinhaber: **BBC Brown Boveri AG**
**Haselstrasse**
**CH-5401 Baden(CH)**

(72) Erfinder: **Wagenbach, Wolfgang, Dipl.-Ing.**
**Rhönstrasse 10**
**W-6484 Birstein(DE)**
Erfinder: **Neumaier, Heinrich, Ing. grad.**
**Fahrstrasse 4**
**W-6450 Hanau 1(DE)**
Erfinder: **Probst, Heinrich, Ing. grad.**
**Waldstrasse 9**
**W-8752 Blankenbach(DE)**
Erfinder: **Peitz, Theo, Ing. grad.**
**Mittlere Maingasse 9**
**W-6450 Hanau 9(DE)**
Erfinder: **Westbrock, Paul, Dipl.-Ing.**
**Goethestrasse 1**
**W-6947 Laudenbach(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**W-6800 Mannheim 1(DE)**

## Beschreibung

Die Erfindung betrifft eine metallgekapselte Schaltanlage gemäß dem Oberbegriff des Anspruches 1.

Eine derartige Schaltanlage ist aus der EP-OS 0128377 bekanntgeworden. Die dortige Schaltanlage bzw. das dort gezeigte Teil ist nur eine Trennschalteranordnung, die in bestimmten Zuordnungen von Phasenleitern zueinander eingesetzt werden kann.

Aufgabe der Erfindung ist es den Einsatzbereich und die Variationsfähigkeit der Hochspannungs-Schaltanlage der eingangs genannten Art weiter zu verbessern.

Diese Aufgabe wird erfindungsgemäß gelöst durch die kennzeichnenden Merkmale des Anspruches 1.

Mit der Erfindung werden folgende Vorteile erzielt: an das Gehäuse, das vorzugsweise den Trennschalter aufnimmt, können durch einfachen Umbau Spannungswandler und andere Stromanschlüsse angeschlossen werden, was alleine dadurch leicht zu bewerkstelligen ist, daß je nach Einstellung der Zwischenstücke die einzelnen Bauelemente in beliebiger Lage eingesetzt bzw. angeschlossen werden können.

Eine weitere Ausgestaltung der Erfindung ist den Ansprüchen 2 bzw. 3 zu entnehmen. Insbesondere gemäß den kennzeichnenden Teilen des Anspruches 3 wird durch die kurbelähnlich geformten Zwischenstücke erreicht, daß die Zuordnung der Anschlußstücke an Anschlußkontaktstücke in jeder beliebigen Lage zueinander erreicht werden kann. Dadurch wird eine deutlich vergrößerte Vielfältigkeit der erfindungsgemäßen Schaltanlage bewirkt; insbesondere ist es erheblich einfacher, an diese außenliegenden Anschlußkontaktstücke spezielle Geräte anzuschließen, wie z.B. Spannungswandler oder auch weitere nennstromführende Kontakte.

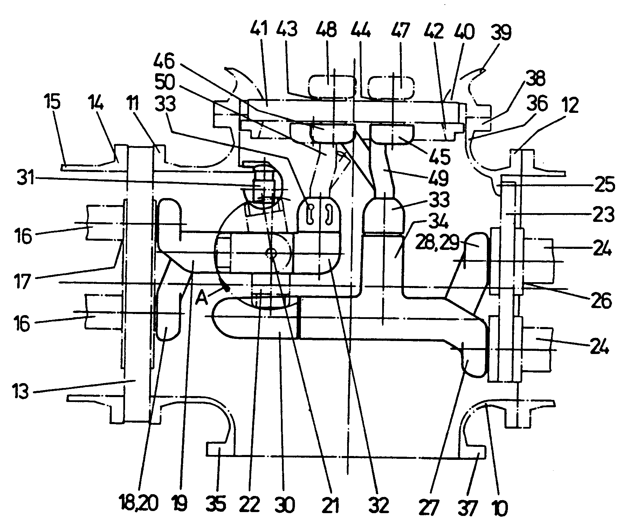

Anhand der Zeichnung, in der ein Ausführungsbeispiel der Erfindung dargestellt ist, soll die Erfindung näher erläutert und beschrieben werden.

Es zeigt:
die einzige Figur
eine Schaltanlage gemäß der Erfindung, in Längsschnittansicht.

Die Schaltanlage besitzt ein Gehäuse 10, das rohrförmig ausgebildet ist und an seinen sich gegenüberliegenden Enden Flansche 11 und 12 aufweist. An den links in der Zeichnung dargestellten Flansch 11 schließt sich ein Schottungsisolator 13 an, an dem ein Flansch 14 eines Kapselungsgehäuses 15 für Phasenleiter 16 angeschlossen ist. Der Schottungsisolator 13 besitzt der Anzahl der Phasenleiter 16 entsprechende Durchführungen 17, an die innerhalb des Schottungsisolators 13 Anschlußstücke 18 anschließen, wie dies auch in der europ. Offenlegungsschrift 0 128 377 der Fall ist. Die Anschlußstücke 18 sind im wesentlichen L-förmig ausgebildet, wobei einer der Schenkel 19 parallel zu der Längsachse der Phasenleiter 16 verläuft, wogegen der andere Schenkel 20 senkrecht dazu auszurichten ist, da mit diesem anderen Schenkel 20 die Verbindung zu den Durchführungen 17 hergestellt wird. Die Länge der Schenkel 20 ist unterschiedlich und an den Abstand der Mittelachsen der Phasenleiter 16 von den Mittelachsen der Schenkel 19 angepaßt. Die Schenkel 19 liegen in einer Ebene und sind durchdrungen von einer Isolierantriesachse 21 und sie tragen je ein Kontaktmesser 22 als beweglichen Kontakt bzw. bewegliches Kontaktstück des in der Kapsel 10 befindlichen Trennschalters.

Am rechten Ende des Gehäuses 10, also am Flansch 12, ist ein Tragisolator 23 angeschlossen, der selbst keine abdichtenden Funktionen aufweist, sondern nur zur Halterung von Phasenleitern 24 dient. Daher ist der Tragisolator 23 an einem nach innen ragenden Fortsatz 25 des Flansches 12 befestigt. Der Tragisolator 23 besitzt ebenfalls Durchführungen 26, an denen rechts vom Tragisolator 23 die Phasenleiter 24 und links davon zweite Anschlußstücke 27 angeschlossen sind. Die zweiten Anschlußstücke 27 sind ähnlich wie die ersten Anschlußstücke 18 im wesentlichen L-förmig ausgebildet, mit einem Schenkel 28, der parallel zu den Schenkeln 19 verläuft, und mit senkrecht dazu verlaufenden Schenkeln 29, deren Länge unterschiedlich ist, damit die auf einer Ebene liegenden Schenkel 28 mit den im Dreieck angeordneten Phasenleitern 24 bzw. Durchführungen 26 verbunden werden können. Die parallel zu den Phasenleitern verlaufenden Schenkel 19 bzw. 28 der Anschlußstücke 18 und 27 verlaufen parallel zueinander und in Abstand, wobei sich die Schenkel 19 und 28 überlappen. Am freien Ende des Schenkels 28 befindet sich ein festes Kontaktstück 30, das mit dem als beweglichen Kontaktstück dienenden Kontaktmesser 22 jedes Anschlußstückes in Verbindung gelangt.

Auf der den Anschlußstücken 27 entgegengesetzt liegenden Seite der Anschlußstücke 18 befindet sich ein Erdungskontakt 31 pro Phase, der von den Kontaktmessern 22 kontaktiert wird, wenn diese gemäß Pfeilrichtung A aus der Einschaltstellung, in der das Kontaktmesser die beiden Anschlußstücke 18 und 27 verbindet, über die Ausschaltstellung, in der sich das Kontaktmesser im Inneren der Kontur der Schenkel 19 befindet, in die Erdungsstellung verschwenkt wird.

Das freie Ende des Schenkels 19 besitzt eine L-förmige Abwinkelung 32, an deren freiem Ende ein Tulpenkontakt 33, strichliert dargestellt, angesetzt ist. Am Schenkel 28 jedes Anschlußstückes 27 ist ein Stutzen 34 angeformt, dessen freies Ende ebenfalls einen Tulpenkontakt aufweist, der dem Tulpenkontakt 33 entspricht und daher auch dessen Bezugsziffer erhalten hat. Die Kontakte bzw. Tulpenkontakte 33 sowohl der L-förmigen Abwinkelungen als auch der Stutzen 34 sind bezogen auf die Mittelachse des Gehäuses 10 in gleicher Höhe bzw. in gleichem Abstand davon entfernt und befinden sich dabei in einer Ebene, die parallel zu den durch die Schenkel 19 bzw. 28 gebildeten Ebenen verläuft.

Quer zu den Flanschebenen der beiden Flansche 11 und 12 sind an dem Gehäuse 10 Gehäusestutzen 35 und 36 angeformt, die in Flanschen 37 und 38 enden, wobei am Flansch 38 ein Anbauteil 39 befestigt ist, das einen Rücksprung 40 aufweist, gegen den ein weiterer Schottungsisolator 41 mittels eines Flanschringes 42 befestigt ist. Am Schottisolator 41 sind Durchführungen 42 bzw. 43 für jede Phase vorgesehen, an dessen Innenseite, also zu den Kontakttulpen 33 hin, Anschlußkontaktstücke 45 und 46 angeschlossen sind, die auf der Außenseite des Schottungsisolators eine Entsprechung in Form von weiteren Anschlußkontaktstücken 47 und 48 haben. Diese Anschlußkontaktstück 45 und 46 sind so am Schottungsisolator angeordnet, daß die Luft- und Kriechstrecken im Bereich des Schottungsisolators 41 eingehalten sind. Ihre Abstände sind geringer als die Abstände der Phasenleiter 16. Zur Verbindung der Tulpenkontaktstücke 33 und der Anschlußkontaktstücke 45 und 46 sind Zwischenkontaktstücke 49 und 50 vorgesehen, die eine kurbelartige Form haben und mit denen von den Anschlußstücken 47/45 bzw. 48/46 auch die Tulpenkontaktstücke 33 gegangen werden kann.

Die Zwischenkontaktstücke 49 und 50 sind dabei so ausgebildet, daß das Anschlußteil 39 zusammen mit dem Schottungsisolator 41 oder ggf. der Schottungsisolator 41 mit den Durchführungen 43 und 44 allein an unterschiedlichen Stellungen angebracht werden kann; durch einfaches Umsetzen des Schottungsisolators können die Durchführungen in unterschiedlichen Stellungen zu den Tulpenkontakten einjustiert werden. Dies hat Vorteile bei der Anbringung bestimmter Komponenten am Flansch 38. Vorzugsweise wird an jener Stelle ein Spannungswandler oder Nennstrom führende Kontakte angebaut werden.

An den Anschlußkontakten 47, 48 können sich nun Kontakte eines Spannungswandlers anschließen oder Nennstrom führende Leiterstücke. Von Bedeutung sind hierbei die kurbelartigen Zwischenkontaktstücke 49, 50. Diese kurbelartigen Zwischenkontaktstücke nämlich sind geeignet, eine Verbindung zwischen den Kontaktstücken 33 bzw. 45 und 46 herzustellen und zwar auf jeweils unterschiedliche und gewünschte Weise. Die kurbelartig ausgebildeten, dick ausgezogen Zwischenstücke 49 verbinden die Anschlußkontaktstücke 33 mit den Kontaktstücken 46 und 45; strichpunktiert sind die Zwischenkontaktstücke 50, die die den linken Phasenleitern zugeordneten Kontakte 33, die also an den L-förmigen Abwinkelungen angeformt sind, mit dem Kontaktstück 46 bzw. 45 verbinden. Es bedarf lediglich einer speziellen Verdrehung der kurbelartigen Zwischenstücke oder Zwischenkontaktstücke bzw. einer speziellen Verdrehung des dort angebrachten Schottisolators, um die entsprechenden Phasenleiter bzw. Anschlußkontakte mit den entsprechenden quer dazu verlaufenden Abgängen zu verbinden.

## Patentansprüche

1.  Metallgekapselte Schaltanlage, mit einem Gehäuse (10), dessen beide sich gegenüberliegende Enden mit Schott- und/oder Tragisolatoren (13, 23) aufweisen, von denen der eine mit den Phasenleitern (16) einer Seite verbundene erste Anschlußstücke (18) und der andere mit an der gegenüberliegenden Seite anschließenden Phasenleitern (24) verbundene zweite Anschlußstücke trägt, die beide parallel in Abstand zueinander verlaufen und sich überlappen, wobi die ersten Anschlußstücke (18) die beweglichen Kontaktstücke (22) in Form von Kontaktmessern und die zweiten Anschlußstücken (27) die festen Kontaktstücke (30) tragen, dadurch gekennzeichnet, daß an den ersten und zweiten Anschlußstücken (18, 27) senkrecht dazu und in gleicher Richtung verlaufende Ansätze (32, 34) angeformt sind, an deren freien Enden Zwischenstücke (50, 49) ansetzbar sind, die mit an senkrecht zu dem Verlauf der Phasenleiter (16, 24) anschließenden, festen Anschlußkontaktstücken (45, 46) in Verbindung bringbar sind.

2.  Schaltanlage nach Anspruch 1, dadurch gekennzeichnet, daß der Ansatz (32) an den ersten Anschlußstücken (18) mit den Anschlußstücken eine hakenartige L-Form bildet, daß die Ansätze (34) an den zweiten Anschlußstücken (27) als daran angeformte, senkrecht dazu verlaufende Stutzen (34) ausgebildet sind und daß an den freien Enden der Ansätze (32, 34) jeweils vorzugsweise Tulpenkontaktstücke (33) angebracht sind, in die die Zwischenstücke (49, 50) eingesteckt sind.

3.  Schaltanlage nach einem der Ansprüche 1 bis 2, dadurch gekennzeichnet, daß die Zwischenstücke (49, 50) kurbelähnlich geformt sind, so daß sie in unterschiedlichen axialen Stellungen ausrichtbar sind und die festen Anschlußkontaktstücke (45, 46) je nach Stellung der Zwischenstücke (49, 50) mit den Ansätzen (32, 33, 34) entweder der einen oder anderen Anschlußstücke (18, 27) und den damit verbundenen zugehörigen Phasenleitern verbindbar sind.

4. Schaltanlage nach Anspruch 3, dadurch gekennzeichnet, daß an den Enden der Zwischenstücke (49, 50), die denjenigen Enden, die mit den Tulpenkontakten (33) in Verbindung gelangen, entgegengesetzt liegen, Verbindungselemente angeformt sind, die an Durchführungen (43, 44) durch einen weiteren, quer zu den Schott- und/oder Tragisolatoren angeordneten weiteren Schott- und/oder Tragisolator (41) angeschlossen sind.

## Claims

1. Metal-encapsulated switchgear having a housing (10), the two ends of which, lying opposite one another, have Schott insulators and/or suspension insulators (13, 23), of which one bears first connection pieces (18) connected to the phase conductors (16) of one side and the other bears second connection pieces connected to phase conductors (24) adjoining on the opposite side, which connection pieces both extend in parallel at a distance from one another and overlap, the first connection pieces (18) bearing the moveable contact pieces (22) in the form of contact blades and the second connection pieces (27) bearing the fixed contact pieces (30), characterised in that extensions (32, 34) are formed on to the first and second connection pieces (18, 27), said extensions running perpendicularly thereto and in the same direction, at the free ends of which extensions intermediate pieces (50, 49) can be positioned which can be connected to fixed connection contact pieces (45, 46) perpendicularly adjacent to the course of the phase conductors (16, 24).

2. Switchgear according to Claim 1, characterised in that the extension (32) on the first connection pieces (18) forms, together with the connection pieces, a hook-shaped L-shape, in that the extensions (34) on the second connection pieces (27) are constructed as connecting elements (34) formed thereon and running perpendicularly thereto, and in that in each case preferably tulip contact pieces (33) into which the intermediate pieces (49, 50) are plugged are attached to the free ends of the extensions (32, 34).

3. Switchgear according to one of Claims 1 to 2, characterised in that the intermediate pieces (49, 50) are of crank-like shape so that they can be aligned in different axial positions and, depending on the position of the intermediate pieces (49, 50) the fixed connection contact pieces (45, 46) can be connected to the extensions (32, 33, 34) either of the one or other connection pieces (18, 27) and to the associated phase conductors connected to them.

4. Switchgear according to Claim 3, characterised in that connecting elements are formed onto the ends of the intermediate pieces (49, 50) which are located opposite those ends which come into contact with the tulip contacts (33), said connecting elements being connected to bushings (43, 44) through a further Shott insulator (41) and/or suspension insulator (41) arranged transversely to the Schott insulators and/or suspension insulators.

## Revendications

1. Installation de commutation en boîtier métallique, comportant un boîtier (10) dont deux extrémités opposées présentent des isolateurs de séparation et/ou porteurs (13, 23) parmi lesquels l'un porte des premiers éléments de connexion (18) reliés aux conducteurs de phase (16) d'un côté, et l'autre porte des seconds éléments de connexion (27) reliés à des conducteurs de phase (24) se raccordant à l'extrémité opposée, lesquels isolateurs s'étendent tous deux parallèlement l'un à l'autre et à distance l'un de l'autre et se chevauchent, les premiers éléments de connexion (18) portant les éléments de contact mobiles (22) qui se présentent sous la forme de couteaux de contact et les seconds éléments de connexion (27) portant les éléments de contact fixes (30), caractérisée en ce que, sur les premiers et les seconds éléments de connexion (18, 27) et perpendiculairement à ceux-ci, sont formées des parties saillantes (32, 34) qui s'étendent dans la même direction, à l'extrémité libre desquelles peuvent être montés des éléments intermédiaires (50, 49) qui peuvent être reliés à des éléments de contact (45, 46) fixes, disposés à la suite, perpendiculairement aux conducteurs de phase (16, 24).

2. Installation de commutation selon la revendication 1, caractérise en ce que la partie saillante (32) sur les premiers éléments de connexion (18) forme avec lesdits éléments de contact un profil en L semblable à un crochet, en ce que les parties saillantes (34) sur les seconds éléments de connexion (27) sont agencées sous forme de barrettes (34) formées sur lesdits éléments de connexion et perpendiculaires à ceux-ci et en ce qu'aux extrémités libres des parties saillantes (32, 34) sont disposés chaque fois de préférence des éléments de contact en forme de tulipe (33) dans lesquels sont enfichés les éléments intermédiaires (49, 50).

3. Installation de commutation selon l'une des revendications 1 à 2, caractérisée en ce que les éléments intermédiaires (49, 50) ont une forme de manivelle telle qu'ils peuvent être amenés dans différentes positions axiales et les éléments de contact de connexion fixes (45, 46), selon la position des éléments intermédiaires (49, 50) peuvent être reliés soit aux uns, soit aux autres des éléments de connexion (18, 27) et aux conducteurs de phase correspondants qui y sont reliés.

4. Installation de commutation selon la revendication 3, caractérisée en ce que, aux extrémités des éléments intermédiaires (49, 50) opposées aux extrémités qui viennent en liaison avec les contacts en forme de tulipe (33), sont formés des éléments de liaison qui sont reliés au niveau de passages (43, 44) par un isolateur de séparation et/ou porteur (41) supplémentaire perpendiculaire aux isolateurs de séparation et/ou porteurs.